# EUROPEAN PATENT APPLICATION

(11) **EP 4 375 175 A1**
(43) Date of publication of application: **29.05.2024**
(21) Application number: 23211864.6
(22) Date of filing: 23.11.2023
(51) Int. Cl.: B62J 43/20, B62M 6/90, B62J 43/13

(54) **FIXING DEVICE FOR A BATTERY MODULE**

(30) Priority: 25.11.2022 CN 202211491352; 07.10.2023 CN 202311284190
(71) Applicant: Trend Power Technology (Changshu) Inc., Changshu High-Tech Industrial Development Zone Jiangsu, Jiangsu (CN)
(72) Inventor: YANG, Chin-Yu, 30348 HsinChu County (TW); KU, David, HsinChu County HsinChu County (TW)
(74) Representative: Lang, Christian

(57) **Abstract**

A fixing device for a battery module (200) includes a locking member (100) and an anti-fall assembly. The locking member (100) is arranged in a tube body of a bike frame and in axial abutment with the battery module (200). The anti-fall assembly includes a pressing member (310) below the stopper (300), a resilient assembly (110) being provided on the locking member (100), and a stopper (300) protruding from an end surface. The anti-fall assembly can provide sufficient supporting force to the stopper (300) through the resilient assembly (110), which is able to prevent the battery module (200) falling from the locking member (100) when it is unlocked. The pressing member (310) pushing towards the resilient assembly (110) to allow the stopper (300) being separated from the supporting surface (114) and releasing the battery module (200) from the fixing device.

## Description

### TECHNICAL FIELD

The present disclosure relates to a fixing device for a battery module provided on an electric bicycle.

### BACKGROUND

In order to keep the simple appearance of an electric bicycle, a battery module may be provided on the down tube or inside the tube. However, when a person dismounts the battery module, the battery module may suddenly fall off without any supporting force. If the person is not giving awareness in advance, the battery module may fall to the ground and be damaged.

### SUMARRY

In order to solve the described problem, the object of the present disclosure is to provide a fixing device for a battery module.

The present disclosure provides a fixing device for a battery module, including a locking member and an anti-fall assembly. The locking member is arranged in a tube body of a bike frame and is used for being in axial abutment with the battery module. The anti-fall assembly includes a stopper protruding from an end surface of the battery module, a pressing member located below the stopper, and a resilient assembly mounted on the locking member. The pressing member has a pressing portion, a pivoting portion and a pushing portion, and the pivoting portion is located between the pressing portion and the pushing portion and is transversely pivoted to an end surface. The resilient assembly axially forms a protruding portion, and the protruding portion has a supporting surface.

When the battery module is moving downwards from a locked position, the stopper is resisting against the supporting surface to maintain the battery module in an unlocked position.

When the battery module is in the unlocked position, the pressing portion can be pressed towards the battery module that sequentially makes the pushing portion pushing towards the resilient assembly to allow the stopper being separated from the supporting surface and releasing the battery module from the fixing device.

Therefore, when the locking member of the battery module of the present disclosure is unlocked, the anti-fall assembly can provide sufficient supporting force to the stopper through the resilient assembly, which is able to prevent the battery module from falling. Moreover, the pressing member is designed on the battery module side rather than on the locking member side, so that a person may hold the battery module simultaneously unlock and release the battery module, thereby reducing the possibility of the battery module falling to the ground due to negligence of the person.

### BRIEF DESCRIPTION OF DRAWINGS

FIG. 1 is an exemplary diagram illustrating the assembly of a fixing device for a battery module of the present disclosure.
FIG. 2 is a schematic diagram illustrating the assembly of a fixing device for a battery module of the present disclosure.
FIG. 3 is a schematic diagram of a battery module of the present disclosure.
FIG. 4 is a schematic diagram of a locking member of the present disclosure.
FIG. 5 is a partial enlarged schematic diagram of an end surface of a battery module in one embodiment.
FIG. 6 is a partial enlarged schematic diagram of an end surface of a battery module in another embodiment.
FIGs. 7 to 10 are schematic diagrams of a battery module of the present disclosure during locking.
FIGs. 11 to 14 are schematic diagrams of a battery module of the present disclosure during unlocking.
FIG. 15 is a exemplary diagram in accordance with yet another embodiment of a fixing device for a battery module of the present disclosure.
FIG. 16 is a schematic diagram of a battery module of FIG. 15.
FIG. 17 is a schematic diagram of a battery module of FIG. 15 during locking.
FIG. 18 is a schematic diagram of a battery module of Fig. 15 during unlocking.
FIG. 19 is an exemplary diagram of illustrating an end surface of a battery module in accordance with yet another embodiment of the present disclosure.
FIG. 20 is an exemplary diagram of illustrating a locking member in accordance with yet another embodiment of the present disclosure.

### DESCRIPTION OF EMBODIMENTS

Embodiments of the present disclosure will be further illustrated below with reference to the accompanying drawings. As far as possible, in the drawings and the description, identical reference numerals denote identical or similar members. In the drawings, shapes and thicknesses may be exaggerated based on simplification and convenient labeling. It will be understood that components not specifically shown in the drawings or described in the description are of a form known to those of ordinary skill in the art. Those skilled in the art can make various changes and modifications according to the contents of the present disclosure.

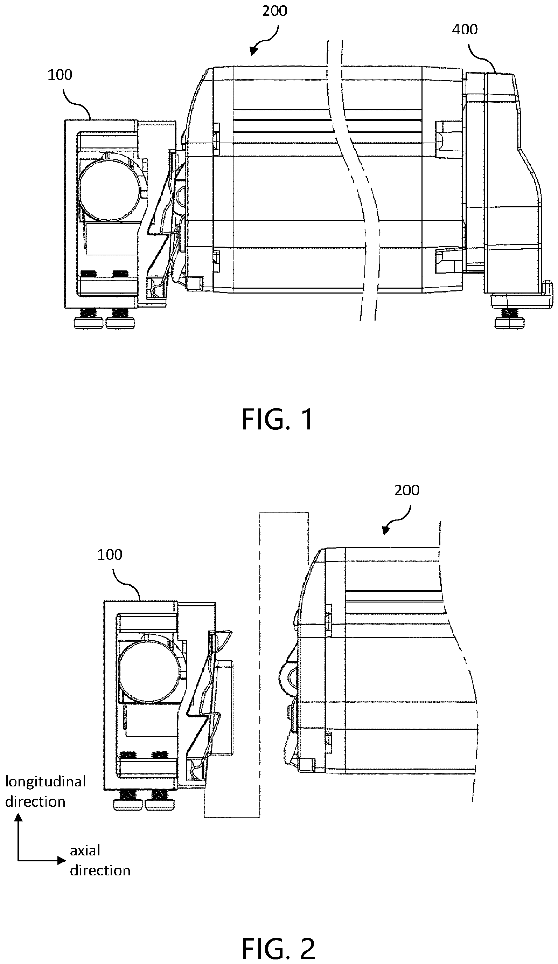

Please refer to FIGs. 1 and 2, which are an exemplary diagram and a schematic diagram illustrating the assembly of a fixing device for a battery module 200 in accordance with the present disclosure. The fixing device includes a locking member 100, and an anti-fall assembly. The two ends of the battery module 200 respectively correspond to the locking member 100 and the battery holder 400. The locking member 100 and the battery holder 400 are respectively arranged at two ends inside a tube body of an electric bicycle. The locking member 100 is used for being in axial abutment with the battery module 200 so as to lock and hold a first end of the battery module 200 (as shown in FIG. 2), and the battery holder 400 holds a second end of the battery module 200. The anti-fall assembly is a plurality of assemblies or structures provided or formed on the first end of the battery module 200 and the locking member 100. In other words, with regard to the locking member 100 and the battery module 200, the anti-fall assembly can be an external component independent of the two, and can also be an internal component or structure belonging to the two, and the present disclosure is not limited thereto. The anti-fall assembly provides the abutting, fixing, and releasing of the locking member 100 and the battery module 200 in relative positions.

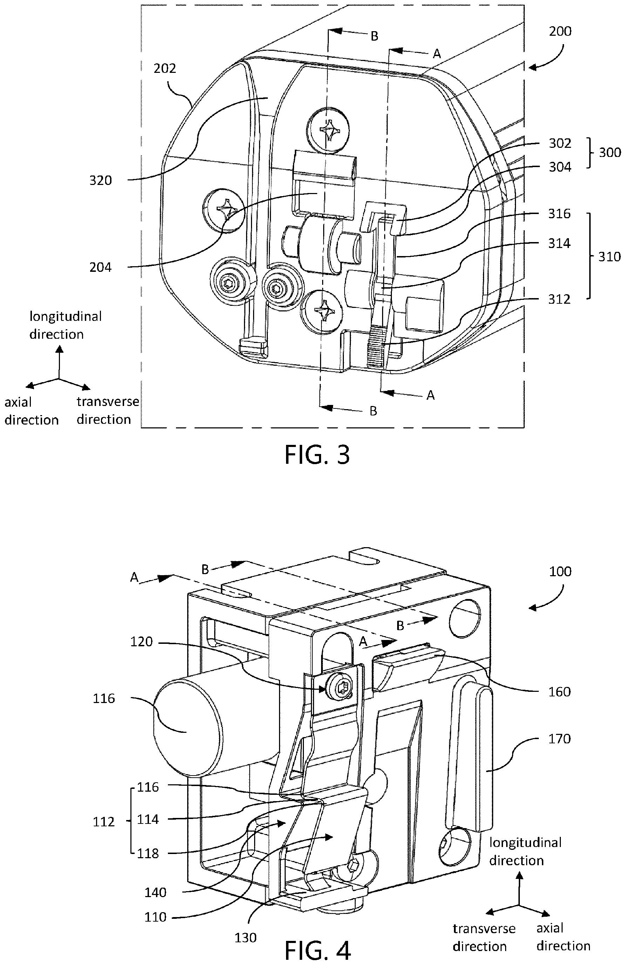

Next, please refer to FIGs. 3 and 4, which are schematic diagrams of the battery module and locking member of the present disclosure. The anti-fall assembly includes a stopper 300, a pressing member, 310 and a resilient assembly 110. The stopper 300 is formed or provided on the end surface 202 of the battery module 200 facing the locking member 100 and protrudes in the axial direction. The pressing member 310 may be integrally provided right below the stopper 300, may also be partially located below the stopper 300, and partially located at substantially the same height as the stopper 300, and may also be partially passed through the stopper 300 in the longitudinal direction. In other words, as long as the stopper 300 and the pressing member 310 correspond to each other in the longitudinal direction, the present disclosure does not limit the position of the end of the pressing member 310 close to the stopper 300 in the longitudinal direction.

The pressing member 310 includes a pressing portion 312, a pivoting portion 314, and a pushing portion 316. The pressing portion 312 is located at an end of the pressing member 310 which is away from the stopper 300, the pushing portion 316 is located at another end of the pressing member 310 close to the stopper 300. The pivoting portion 314 is transversely pivoted on the end surface 202 and located between the pressing portion 312 and the pushing portion 316. When the battery module 200 is being released, the pressing portion 312 receives a force applied by a person so that the pushing portion 316 moves towards the locking member 100 with the pivoting portion 314 as pivot.

On the other hand, the resilient assembly 110 is provided longitudinally on the locking member 100 and axially forms a protruding portion 112. When the battery module 200 is in axial abutment with the locking member 100, the transverse position of the protruding portion 112 is the same as or corresponding to the transverse position of the stopper 300 and the pressing member 310. The protruding portion 112 has a supporting surface 114 facing upwards. In some embodiments, the resilient assembly 110 is a plate, and the protruding portion 112 and the supporting surface 114 are formed by bending the plate. Preferably, the first end of the plate is provided with a screw hole 120, and an internal thread (not shown) is provided on the locking member 100.

The first end of the plate can be fastened on the locking member 100 by means of a screw, and the second end of the plate is a free end movable relative to the axial direction. Preferably, a limiting groove 130 is at the bottom of the locking member 100 also provided, and the limiting groove 130 is used to accommodate the second end of the plate. The limiting groove 130 can limit the movement range of the second end of the plate in the axial direction, so that the second end can abut against the inner wall of the limiting groove 130 when being pushed outwards, thereby avoiding permanent deformation of the plate due to excessive displacement in the axial direction.

Although the protruding portion 112 of the resilient plate can provide an acting force for supporting the battery module 200, the resilient plate may be permanently deformed and lose the supporting force due to the long-term use and the weight of the battery module 200. Therefore, in some embodiments, the anti-fall assembly further includes a platform 140 formed or provided on the locking member 100, the platform 140 is located at a position corresponding to the resilient plate. The platform 140 has the same shape as the supporting surface 114 of the protruding portion 112 in the axial direction. Regardless of the protruding portion 112 of the resilient plate is completely or partially resisting against the platform 140, the platform 140 can support the weight of the battery module 200 by means of the resilient plate, thereby preventing permanent deformation of the resilient plate. For such aforementioned "the partially resisting against", in some embodiments, the protruding portion 112 further has a first bending portion 116 and a second bending portion 118, which are respectively located at one end of the supporting surface 114 close to the locking member 100 and the other end of the supporting surface 114 away from the locking member 100. The first bending portion 116 abuts against the locking member 100 or the platform 140, and the second bending portion 118 abuts against the stopper 300 to support the battery module 200. In other words, even if only a part of the protruding portion 112 abuts against the stopper 300, the other part of the protruding portion 112 remains to be able to disperse the weight of the battery module 200, thereby preventing permanent deformation of the resilient assembly 110. In some embodiments, the included angle of the first bending portion 116 is inversely proportional to the supporting force of the supporting surface 114, for example, the included angle of the first bending portion 116 is about 80 or 85 degrees.

In some embodiments, the stopper 300 has a first inclined surface 302 and a horizontal surface 304. The first inclined surface 302 faces upwards and is located on a side of the stopper 300 different from the pressing portion 310. The horizontal surface 304 faces downwards, and is located on another side of the stopper 300 facing the pressing portion 310. During the process of abutting the battery module 200 with the locking member 100, the first inclined surface 302 is used for being contact with the protruding portion 112 of the locking member 100 and axially pushing the protruding portion. The horizontal surface 304 is then used for mutually abutting with the supporting surface 114 of the protruding portion 112 in the longitudinal direction after the protruding portion 112 is axially restored.

In some embodiments, an alignment groove 320 is further longitudinally provided on the end surface 202 of the battery module 200, the locking member 100 is provided with an alignment member 170, and the alignment groove 320 interacts with the alignment member 170 corresponded to each other in a transverse position. When the battery module 200 is in abutment with the locking member 100, the alignment member 170 can be longitudinally displaced in the alignment groove 320 without being transversely displaced, thereby avoiding inclination or displacement of the battery module 200. Similarly, the end surface 202 may also be provided with an alignment member 170, and correspondingly, the locking member 100 is longitudinally provided with an alignment groove 320. The alignment member 170 may be in the form of elongated strips or blocks extending longitudinally as long as it protrudes in the axial direction. Preferably, the locking member 100 further has a lock 150 and a locking tongue 160, and the end surface 202 is further provided with a groove 204. The lock 150 interlocks the locking tongue 160 and is used for controlling the axial reciprocating movement of the locking tongue 160. The groove 204 is provided between the alignment groove 320 and the pressing member 310 and corresponds to the locking tongue 160. The lock 150, the locking tongue 160 and the groove 204 are used for providing a second stage of locking for the battery module 200. Specifically, when the battery module 200 is in abutment with the locking member 100 and the protruding portion 112 of the resilient plate is located a distance below the stopper 300. The groove 204 accommodates the locking tongue 160, and obtains an upward supporting force for limiting the position of the battery module 200.

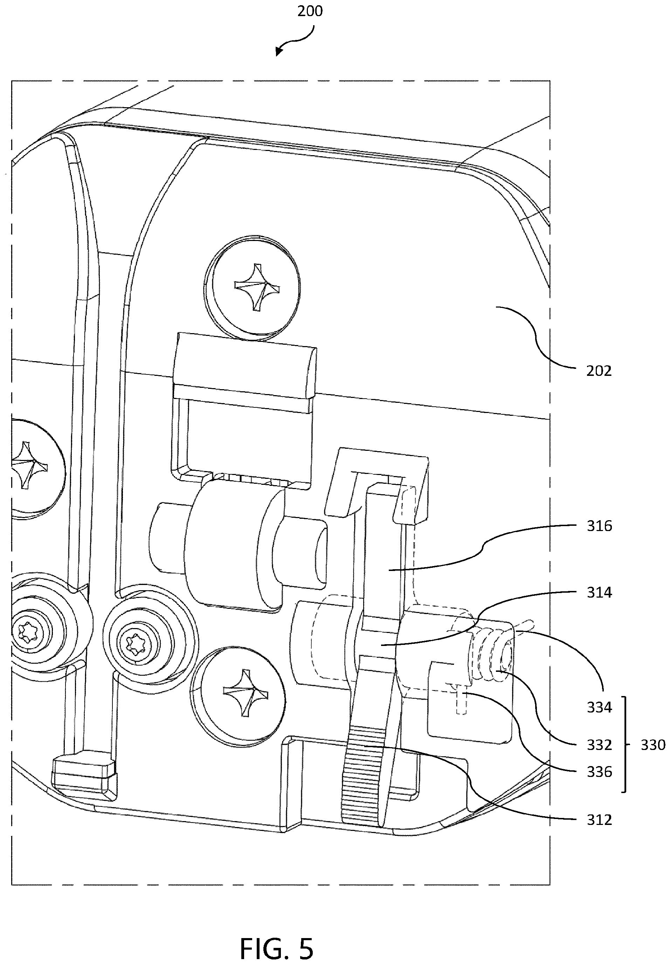

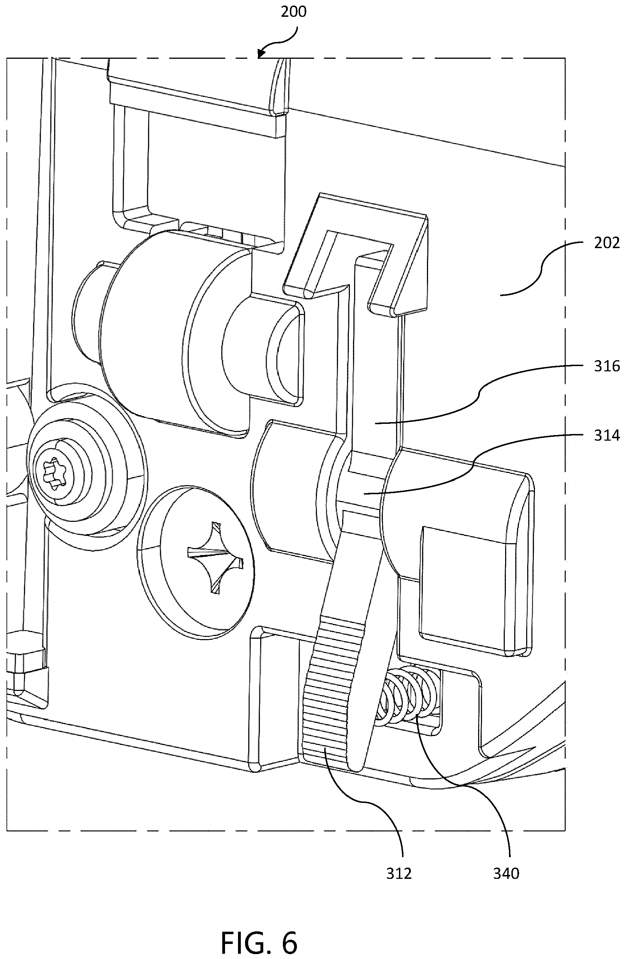

Please refer to FIGs. 5 and 6, which are partial enlarged schematic diagrams of the end surface of the battery module in accordance with other embodiments. In some embodiments, the torsion spring 330 is also provided on the end surface 202 of the battery module 200. The torsion spring 330 has a coil portion 332, a fixed end 334, and a torsion end 336 that extending from both ends of the coil portion 332. The coil portion 332 and the fixed end 334 are firmly provided on the end surface 202, and the torsion end 336 is firmly provided in the pivoting portion 314. In some embodiments, the battery module 200 further includes at least one spring 340, one end of which is fixed on the end surface 202, and the other end of which corresponds to or is fixed on the pressing portion 312. The spring 340 may be a tension spring, a compression spring, or a coil spring. After the pressing portion 312 is subjected to force to cause the pushing portion 316 to rotate relative to the pivoting portion 314, the pressing portion 312 can return to the original position by the torsion spring 330 or the spring 340.

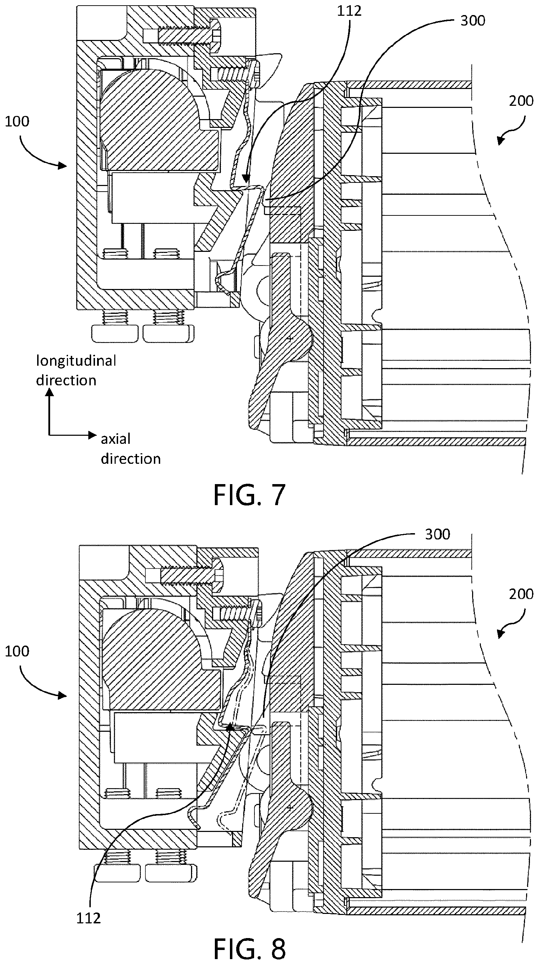

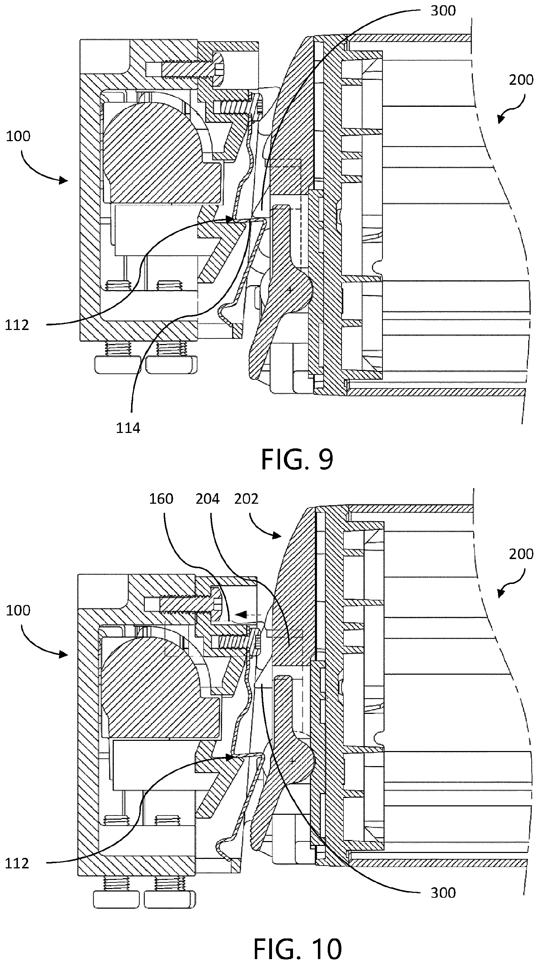

Please refer to FIGs. 7 to 10, the following describes the processes of abutting the battery module 200 with the locking member 100 and completing the locking. The battery module and the locking member illustrated in FIGs. 7 to 10 are cross-sectional views taken along line AA' in FIGs. 3 and 4, respectively. FIG. 7 illustrates the first end of the battery module 200 is in abutment with the locking member 100 moving from bottom to top after the battery holder receives the second end of the battery module 200. In FIG. 8, as the battery module 200 continues to move upwards, the protruding portion 112 of the resilient assembly 110 abuts against the portion protruding from the stopper 300 and gradually retreats towards the locking member 100 in the axial direction. As shown in FIG. 9, until the protruding portion 112 no longer abuts against the portion protruding from the stopper 300, the protruding portion 112 is axially reset towards the battery module 200. Finally, the stopper is located above the protruding portion 112, the downwards weight of the battery module 200 stably abutted onto the supporting surface 114 of the protruding portion 112, which is defined as an unlocked position.

The battery module 200 and the locking member 100 may further have a second stage of locking, such as the lock 150, the locking tongue 160 and the groove 204 as described in the above embodiments. Referring to FIG. 10, as the battery module 200 moves further upwards, the stopper does not abut against the supporting surface 114 of the protruding portion 112, which is defined as a locked position. On the other hand, the locking tongue 160 abuts against the end surface 202 and gradually retreat towards the locking member 100 in the axial direction. Until the locking member 160 and the groove 204 are at the same height, the locking member 160 no longer abuts against the end surface 202 and returns axially towards the groove 204. Finally, the groove 204 accommodates the locking tongue 160. The downwards weight of the battery module 200 is stably abutted against the locking tongue 160.

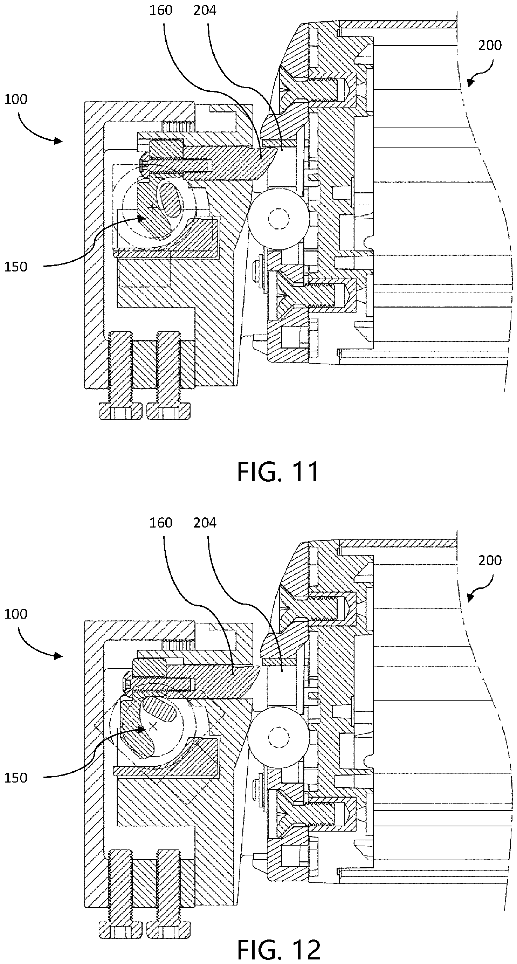

Next, the following describes the process of unlocking the battery module 200 and separating the battery module from the locking member 100. If a second stage locking is provided by the locking member 100 and the battery module 200, the locking tongue 160 needs to be separated from the groove 204 to unlock the second stage locking before a first locking segment can be released. Please refer to FIGs. 11 and 12, which are cross-sectional views illustrated taken along line BB' in FIGs. 3 and 4, respectively. As shown in FIG. 11, the groove 204 accommodates the locking tongue 160, and the battery module 200 is stably abutted against the locking tongue 160 downwards by means of its own weight of the battery module 200, which is in a state of the second stage locking. As shown in FIG. 12, when a person inserts a key to cause the lock 150 to rotate, the lock 150 will interlock the locking tongue 160, causing the locking tongue 160 to retreat axially towards the locking member 100 to be separated from the groove 204. At this time, the battery module 200 loses the supporting force provided by the locking tongue 160 and drops downwards.

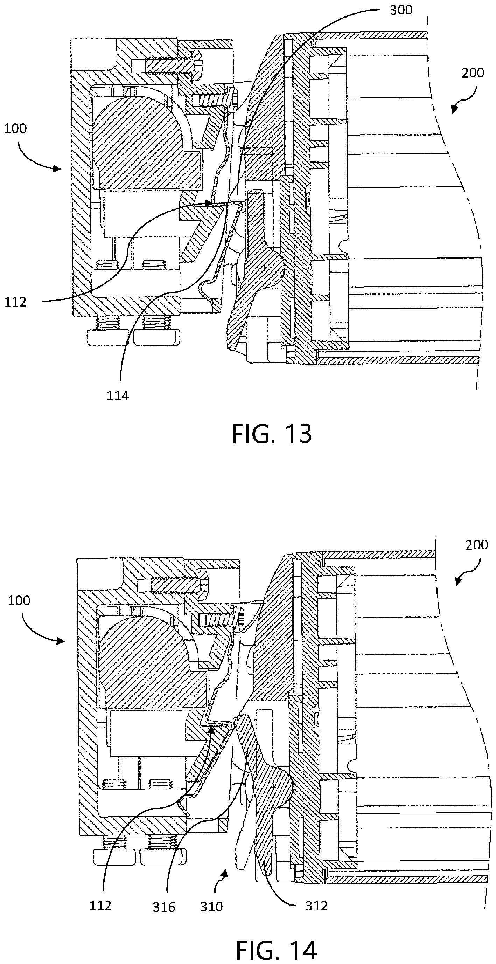

Please refer to FIGs. 13 and 14, which are cross-sectional views illustrated taken along line AA' in FIGs. 3 and 4, respectively. As shown in FIG. 13, after the battery module 200 is downwardly moving from the locked position, the stopper 300 abuts against the supporting surface 114 of the protruding portion 112 to maintain the battery module 200 in the unlocked position. By means of the cooperation between the stopper 300 and the protruding portion 112, even if the person with another hand does not hold the battery module 200 during the rotation of the lock 150, the battery module 200 can still be secured on the locking member 100 without falling to the ground and causing damage.

As shown in FIG. 14, in order to unlock the first stage of locking of the battery module 200, the person must apply a force to the pressing portion 312 of the pressing member 310 to cause the pushing portion 316 to push the protruding portion 112 of the resilient assembly 110 to retract towards the locking member 100 until the protruding portion 112 is separated from the stopper 300. This means that the person is likely to instinctively hold the battery module 200 with left hand while pressing the pressing portion 312 of the pressing member 310 with left finger. Therefore, even if the battery module 200 loses the supporting force provided by the protruding portion 112 and falls downwards, the person's left palm will still hold the battery module 200. In other words, as the pressing member 310 to be unlocked is designed on the end surface 202 of the battery module 200, rather than on the locking member 100, the user can instinctively hold the battery module 200 when unlocking. Such a design can effectively reduce the possibility of the battery module 200 falling to the ground due to person's negligence.

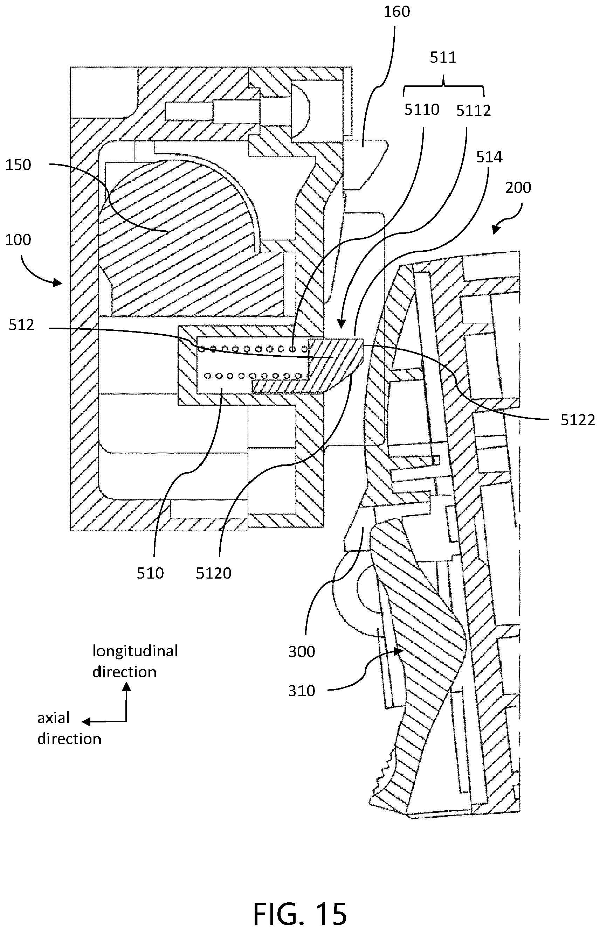

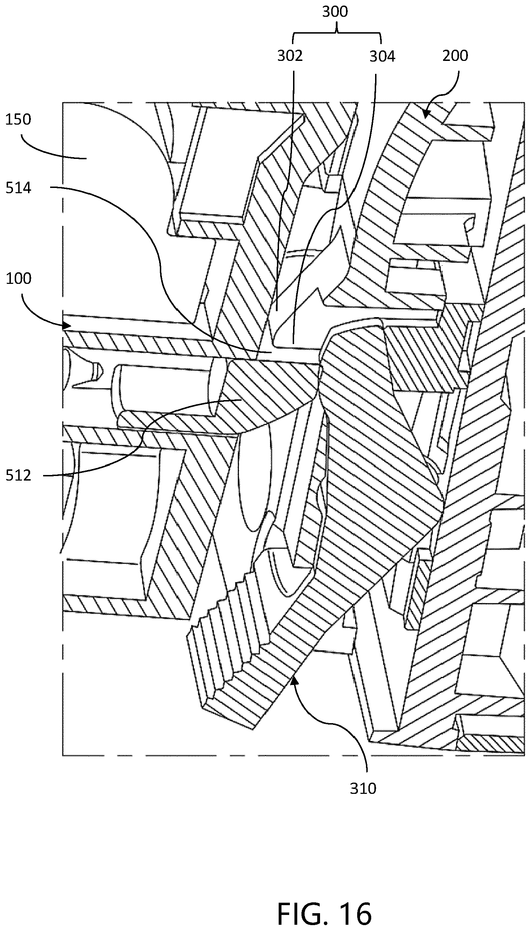

Please refer to FIGs. 15, and 16, which are exemplary diagrams of illustrating a fixing device for a battery module 200 in accordance with yet another embodiment of the present disclosure. The anti-fall assembly includes a stopper 300, a pressing member 310, a first groove 510, and a resilient assembly 511. The stopper 300 is provided on the end surface 202 of the battery module 200 facing the locking member 100, and the stopper 300 protrudes in the axial direction. The stopper 300 and the pressing member 310 of this embodiment are substantially the same as the foregoing embodiment as shown in Fig. 3, and are not repeated here.

The first groove 510 is axially opened on the locking member 100, and the resilient assembly 511 is provided inside the first groove 510 and axially forms a protruding portion 512. When the battery module 200 is in axial abutment with the locking member 100, the transverse position of the protruding portion 512 is the same as or corresponding to the transverse position of the stopper 300 and the pressing member 310. The protruding portion 512 has a supporting surface 514 facing upwards.

In some embodiments, the resilient assembly 511 includes an elastic member 5110 and a block 5112, the elastic member 5110 are provided inside the first groove 510, a part of the block 5112 is located inside the first groove 510 and is connected to the elastic member 5110, and another part of the block 5112 protrudes out of the first groove 510 to serve as the protruding portion 512. The protruding portion 512 further has a second inclined surface 5120 and a vertical surface 5122. When the battery module is moving upwards along the fixing device, the first inclined surface 302 is in contact with the second inclined surface 5120 and pushes the second inclined surface 5120 so that the block 5112 is retracted inside the first groove 510 until the battery module 200 is in the locked position, the elastic member 5110 drives the block 5112 to be reset, and the supporting surface 514 is located below the horizontal surface 304.

In some embodiments, the first inclined surface 302 faces upwards and is located on a side of the stopper 300 different from the pressing portion 310, while the horizontal surface 304 faces downward and is located on a side of the stopper 300 facing the pressing portion 310. In the process of abutting the battery module 200 with the locking member 100, the first inclined surface 302 is used for contacting and axially pushing the protruding portion 512 of the locking member 100, and after the protruding portion 512 is axially reset, the horizontal surface 304 is used for mutually abutting with the supporting surface 514 of the protruding portion 512 in the longitudinal direction.

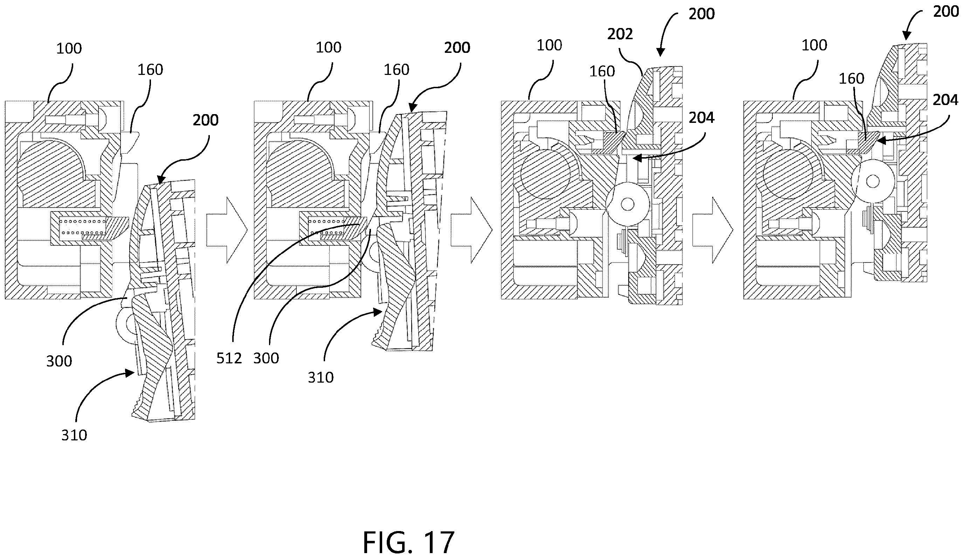

Please refer to FIG. 17, in which there are four consecutive actions illustrated from left to right in sequence showing how to install a battery module on the fixing device. As shown in the first action, after the second end of the battery module 200 is carried on the battery holder, the first end of the battery module 200 is in abutment with the locking member 100 from bottom to top. As shown in the second action, as the battery module 200 continues to move upwards, the protruding portion 512 of the resilient assembly 511 abuts against the portion protruding from the stopper 300 and gradually retreats towards the groove 510 in the axial direction until the protruding portion 512 no longer abuts against the protruding portion of the stopper 300, and the protruding portion 512 is axially reset towards the battery module 200.

As shown in the third action, the end surface 202 is further provided with a groove 204, also mentioned as second groove in this embodiment. When the battery module 200 keeps moving upwards, the stopper 300 no longer abuts against the supporting surface 514 of the protruding portion 512. Eventually, as shown in the fourth action, the groove 204 accommodates the locking tongue 160, which is defined as a locked position at this time.

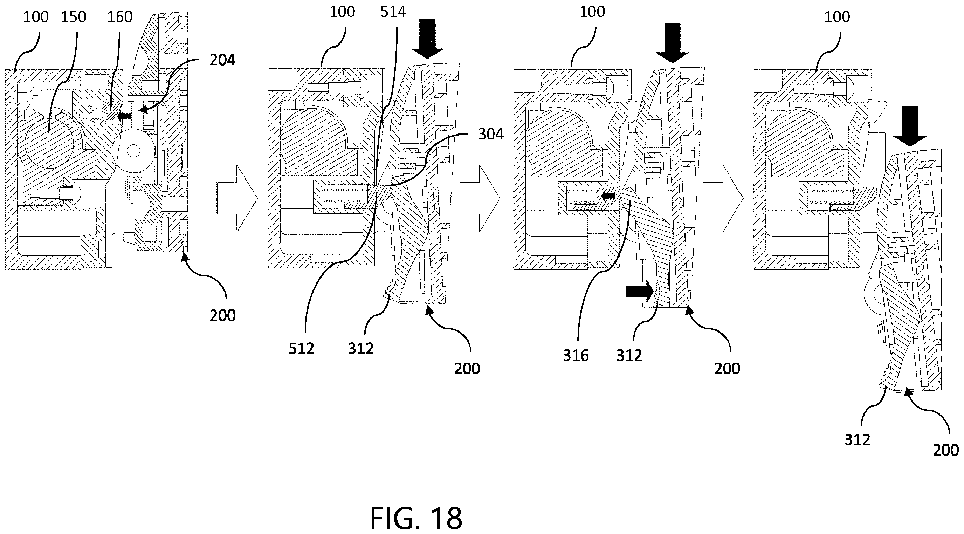

Please refer to FIG. 18, in which there are four consecutive actions illustrated from left to right in sequence showing how to release a battery module from the fixing device. As shown in the first action, when a person inserts a key to cause the lock 150 to rotate, the lock 150 will interlock the locking tongue 160, causing the locking tongue 160 to retreat axially towards the locking member 100 to be separated from the groove 204. At this time, the battery module 200 loses the supporting force provided by the locking tongue 160 and fall offs downwards. As shown in the second action, after the battery module 200 is downwardly moving from the locked position, the horizontal surface 304 of the stopper 300 abuts against the supporting surface 514 of the protruding portion 512, which is defined as an unlocked position. By means of the cooperation of the stopper 300 and the protruding portion 512, even if the person does not hold the battery module 200 with another hand during the rotation of the lock 150, the battery module 200 will still be fixed on the locking member 100 without falling down the ground and causing damage. As shown in the third and the fourth actions, the battery module 200 can continue downwardly to move and disengage from the locking member 100 only when the person presses the pressing portion 312 of the pressing member 310, causing the pushing portion 316 to push the vertical surface 5122 to retract the protruding portion 512 inside the first groove 510.

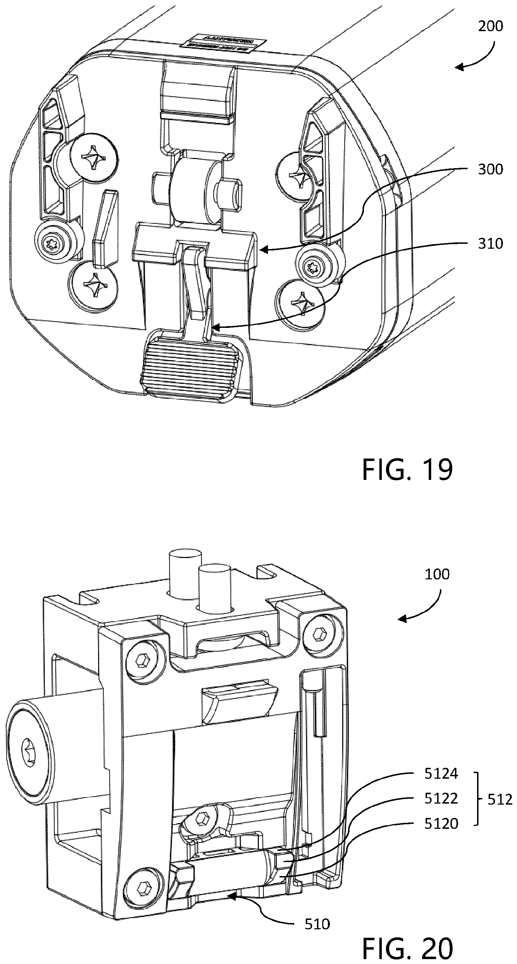

With reference to FIGs. 19 and 20, which are exemplary diagrams of illustrating a fixing device for a battery module 200 in accordance with yet another embodiment of the present disclosure. In this embodiment, the stopper 300 and the pressing member 310 are arranged on the middle of the end surface of the battery module 200. The resilient assembly 511 is provided on the middle of the locking member 100 corresponding to the pressing member 310. The second inclined surfaces 5120 are formed at two respective ends of the protruding portion 512. The vertical surface 5122 are formed between the second inclined surfaces 5120, and the protrusion of the vertical surface 5122 shorter than then protrusion of the second inclined surfaces 5120 (As shown in FIG. 20). In this manner, when installing the battery module 200 on to the fixing device, the stopper 300 will push the second inclined surfaces 5120 instantly to retract the protruding portion 512 inside the first groove 510. On the contrary, when the battery module 200 is going to release from the fixing device, the stopper 300 will remaining abut against the supporting surface 5124 until the pressing member 310 pushes the vertical surface 5122 further more retreating the protruding portion 512 into the first groove 510.

## Claims

1. A fixing device for a battery module (200), the fixing device comprising a locking member (100) and an anti-fall assembly, wherein the locking member (100) is arranged in a tube body of a bike frame, and the locking member (100) is in axial abutment with the battery module (200), **characterized in that** the anti-fall assembly comprises:
a stopper (300) protruding from an end surface of the battery module (200) facing the locking member (100);
a pressing member (310) being located below the stopper (300) and having a pressing portion (312), a pivoting portion (314), and a pushing portion (316), wherein the pivoting portion (314) is located between the pressing portion (312) and the pushing portion (316) and being transversely pivoted to the end surface; and
a resilient assembly (110) being mounted on the locking member (100) and axially forming a protruding portion (112), the protruding portion (112) having a supporting surface (114), wherein:
when the battery module (200) is moving downwards from a locked position, the stopper (300) is resisting against the supporting surface (114) to maintain the battery module (200) in an unlocked position; and
when the battery module (200) is in the unlocked position, the pressing portion (312) can be pressed towards the battery module (200) that sequentially makes the pushing portion (316) pushing towards the resilient assembly (110) to allow the stopper (300) being detached from the supporting surface (114) and releasing the battery module (200) from the fixing device.

2. The fixing device according to claim 1, **characterized in that** a horizontal surface (304) is provided on a side of the stopper (300) towards the pressing member (310), and a first inclined surface (302) is provided on another side of the stopper (300) towards the pressing member (310), wherein
when the battery module (200) is moving upwards along the fixing device, the stopper (300) pushes the resilient assembly (110) approaching to the locking member (100), and the protruding portion (112) moves along the first inclined surface (302) until the battery module (200) is in the locked position, the resilient assembly (110) is then restored, and the supporting surface (114) is located below the horizontal surface (304).

3. The fixing device according to claim 1, **characterized in that** the resilient assembly (110) is a plate, the protruding portion (112) and the supporting surface (114) are formed by bending the plate, wherein a first end of the plate is fixed on the locking member (100), and a second end of the plate is a free end.

4. The fixing device according to claim 3, **characterized in that** a limiting groove (130) at the bottom of the locking member (100) is provided corresponding to a position underneath the resilient assembly (110), which allows the second end of the plate moving in the limiting groove (130).

5. The fixing device according to claim 1, **characterized in that** the anti-fall assembly further comprises a platform, the platform is provided on the locking member (100), wherein when the stopper (300) is resisting against the supporting surface (114), the resilient assembly (110) is partially resisting against the platform.

6. The fixing device according to claim 1, **characterized in that** the protruding portion (112) further has a first bending portion (116) and a second bending portion (118), the first bending portion (116) is located at one end of the supporting surface (114) close to the locking member (100), and the second bending portion (118) is located at the other end of the supporting surface (114) away from the locking member (100).

7. The fixing device according to claim 6, **characterized in that** an included angle of the first bending portion (116) is inversely proportional to a supporting force of the supporting surface (114).

8. The fixing device according to claim 1, **characterized in that** the pivoting portion (314) is provided with a torsion spring (330).

9. The fixing device according to claim 1, **characterized in that** at least one spring is provided between the pressing portion (312) and the end surface of the battery module (200).

10. The fixing device according to claim 1, **characterized in that** the locking member (100) is further provided with a first groove (510), and the resilient assembly (110) comprises:
an elastic member (5110) provided inside the first groove (510);
a block (5112), a part of the block (5112) is located inside the first groove (510) and is connected to the elastic member (5110), and another part of the block (5112) protrudes out of the first groove (510) to serve as the protruding portion (112).

11. The fixing device according to claim 10, **characterized in that** the protruding portion (112) further has a second inclined surface (5120), a side of the stopper (300) facing corresponded to the pressing member (310) having a horizontal surface (304), and a first inclined surface (302) is provided on another side of the stopper (300) towards the pressing member (310), wherein
when the battery module (200) is moving upwards along the fixing device, the first inclined surface (302) is in contact with the second inclined surface (5120) and pushes the second inclined surface (5120) making the block (5112) retracted inside the first groove (510) until the battery module (200) is in the locked position, the elastic member (5110) then drives the block (5112) to be reset, and the supporting surface (114) is located below the horizontal surface (304).

12. The fixing device according to claim 11, **characterized in that** the stopper (300) and the pressing member (310) are arranged on the middle of the end surface of the battery module (200), the resilient assembly (110) is provided on the middle of the locking member (100) corresponding to the pressing member (310), wherein the protrusion of a vertical surface (5122) of the protruding portion (512) shorter than then protrusion of the second inclined surface (5120).

13. The fixing device according to claim 1, **characterized in that** the end surface of the battery module (200) further comprises an alignment groove (320) longitudinally provided on the end surface, and the alignment groove (320) interacted with an alignment member (170) is provided on the locking member (100), which limits a transverse displacement of the battery module (200) corresponded to the locking member (100).

14. The fixing device according to claim 1, **characterized in that** the battery module (200) further comprises a second groove being formed on the end surface, corresponded to the locked position; the second groove is interacted with a locking tongue provided on the locking member (100), is located between the alignment groove (320) and the pressing member (310), and is used for accommodating the locking tongue which relatively secures the position of the locking member (100) and the battery module (200).
